# FASCICULE DE BREVET EUROPEEN

(11) **EP 0 754 391 B1**
(45) Date de publication et mention de la délivrance du brevet: **28.10.1998**
(21) Numéro de dépôt: 95916712.3
(22) Date de dépôt: 05.04.1995
(51) Int. Cl.: H04N 7/167

(54) **PROCEDE DE DIFFUSION DE PROGRAMMES A ACCES CONDITIONNEL PROGRESSIF ET A SEPARATION DU FLUX D'INFORMATION ET RECEPTEUR CORRESPONDANT**
VERFAHREN ZUR PROGRAMMVERTEILUNG MIT PROGRESSIVEM BEDINGTEM ZUGRIFF UND INFORMATIONSSTROMTRENNUNG SOWIE ENTSPRECHENDER EMPFÄNGER
METHOD FOR BROADCASTING GRADUAL CONDITIONAL ACCESS PROGRAMMES WITH DATA FLOW SEPARATION, AND RECEIVER THEREFOR

(30) Priorité: 06.04.1994 FR 9404012
(43) Date de publication de la demande: 22.01.1997
(73) Titulaire: FRANCE TELECOM, 75015 Paris (FR); TELEDIFFUSION DE FRANCE, 75015 Paris (FR)
(72) Inventeur: GIACHETTI, Jean-Luc, F-35830 Betton (FR); GUILLOU, Louis, F-35230 Bourgbarre (FR); PACAUD, Jean-Claude, F-35260 Cancale (FR)
(74) Mandataire: Dubois-Chabert, Guy
(86) Numéro de dépôt international: FR9500435
(87) Numéro de publication internationale: WO9528058

(56) Documents cités:
- EP-A- 0 461 029
- EP-A- 0 583 202
- FR-A- 2 700 092
- 18TH INTERNATIONAL TELEVISION SYMPOSIUM AND TECHNICAL EXHIBITION, 15 Juin 1993 MONTREUX, SWITZERLAND, pages 761-769, VIGARI 'A DEVICE FOR REAL-TIME MODIFICATION OF ACCESS CONDITIONS IN A D2-MAC/PACKET EUROCRYPT SIGNAL : THE TRANSCONTROLLER'
- IEEE TRANSACTIONS ON CONSUMER ELECTRONICS, vol. 38, no. 3, Août 1992 NEW YORK, US, pages 188-194, ANGEBAUD ET AL. 'CONDITIONAL ACCESS MECHANISMS FOR ALL-DIGITAL BROADCAST SIGNALS'

## Description

### Domaine technique

La présente invention a pour objet un procédé de diffusion de programmes à accès progressif et à séparation du flux d'information et un récepteur correspondant.

Elle trouve une application dans la télévision à péage, dans la diffusion de programmes radiophoniques ou de sons ou de données, dans la transmission et la distribution d'éléments de programmes, etc...

### Etat de la technique antérieure

Dans les systèmes classiques de diffusion de programmes, l'accès aux programmes est réservé à une certaine population de récepteurs. S'il est possible de distinguer divers droits d'accès (un programme peut être par exemple simultanément accessible par abonnement et par achat impulsif), il demeure qu'un récepteur est ou n'est pas autorisé selon qu'il dispose ou non d'un certain droit d'accès.

Or, pouvoir attirer le télespectateur ou l'auditeur en découvrant volontairement tout ou partie du contenu de l'image ou du son d'un programme pendant une période de temps donnée est un atout commercial important pour tout système d'accès conditionnel. Cette fonction existe actuellement sur certains systèmes de télévision à péage utilisant un procédé d'embrouillage ne transformant pas profondément l'image. Mais en numérique, les techniques d'embrouillage couramment utilisées transforment trop profondément le signal pour permettre de laisser "deviner" le programme à l'utilisateur.

La demande de brevet français n°92 15841 déposée le 29 décembre 1992 et intitulée "Procédé de diffusion de programmes à accès conditionnel permettant un accès progressif à de tels programmes" (publiée le 01.07.1994 sous le numéro FR-A-2700092) ou la demande américaine correspondante 08/172, 817 du 27 décembre 1993 (publiée le 15.08.1995 sous le numéro US-A-5 442 701) décrit une technique permettant d'avoir un "aperçu" de certains programmes. Cet aperçu est rendu possible par l'usage d'un droit d'accès qui n'est que partiel, au contraire du droit d'accès habituel, qui est total. Ainsi, à côté des récepteurs autorisés, qui peuvent accéder complètement à un programme et des récepteurs non autorisés, qui ne peuvent rien recevoir de celui-ci, on trouve, selon cette technique, d'autres récepteurs pouvant avoir un aperçu du programme, c'est-à-dire pouvant accéder à une forme discernable mais non utilisable du programme.

Le procédé décrit dans cette demande de brevet comprend les opérations suivantes :
- on embrouille des informations propres à divers programmes,
- on transmet les informations ainsi embrouillées pour chaque programme,
- de manière synchronisée avec chaque programme, on transmet des messages de contrôle d'accès propres à chacun de ces programmes, ces messages étant aptes à permettre le désembrouillage et la restitution des programmes dans des récepteurs disposant des droits d'accès correspondant,
- on transmet en outre des messages de contrôle d'accès partiel à au moins certains de ces programmes, ces messages de contrôle d'accès partiel étant aptes à permettre le désembrouillage et la restitution partielle des programmes correspondants pour des récepteurs disposant d'un droit d'accès partiel.

De manière avantageuse, pour mettre en oeuvre ce procédé, on découpe le flux d'information correspondant à chaque programme en un premier flux dit flux élémentaire, correspondant à un programme qui, une fois restitué dans un récepteur, sera discernable sans être directement utilisable, et un second flux, dit flux complémentaire, permettant de compléter le premier, pour permettre de restituer complètement le programme.

Dans cette variante, les messages de contrôle d'accès partiel s'appliquent aux flux élémentaires.

Le problème technique que se propose de résoudre la présente invention est la production du flux élémentaire et du flux complémentaire que nécessite cette technique et cela à partir d'un flux unique sortant d'un codeur quelconque.

### Exposé de l'invention

La présente invention porte donc, notamment, sur une étape particulière du procédé d'émission de programmes à accès conditionnel progressif, à savoir l'étape de formation des deux flux dits élémentaire et complémentaire. L'invention s'applique dans le cas où le flux d'information sortant du codeur est de type numérique, car c'est dans ce cas que se posent les problèmes les plus ardus pour l'accès conditionnel progressif. Par ailleurs, on suppose que les informations sont multiplexées, c'est-à-dire qu'elles constituent un "multiplex" formé d'une suite d'éléments qui peuvent être, selon la nature du multiplexage, des trames, des paquets, ou autres, ...

Dans ces conditions et selon l'invention, pour séparer le flux d'information multiplexé en un flux élémentaire et en un flux complémentaire, on prend alternativement des groupes de m éléments successifs et de p éléments successifs du multiplex, les groupes de m éléments constituant le flux élémentaire et les groupes de p éléments le flux complémentaire.

De façon précise, la présente invention a donc pour objet un procédé de diffusion de programmes à accès conditionnel progressif, dans lequel :
- on sépare un flux d'information correspondant à une composante d'un programme en un premier flux, dit flux élémentaire et en un second flux, dit flux complémentaire,
- on embrouille au moins le flux complémentaire à l'aide d'un mot de contrôle,
- de manière synchrone avec chaque programme, on transmet des messages de contrôle d'accès permettant de désembrouiller et de restituer les flux embrouillés dans des récepteurs disposant des droits d'accès correspondants, la restitution du seul flux élémentaire conduisant à une composante de programme discernable sans être directement utilisable, le désembrouillage du flux complémentaire permettant de compléter la composante du programme pour permettre de restituer complètement le programme,
ce procédé étant caractérisé par le fait que, le flux d'information étant sous forme de multiplex numérique constitués d'une suite d'éléments, on constitue le flux élémentaire en prenant, dans le multiplex, des groupes de m éléments successifs et on constitue le flux complémentaire en prenant, dans le multiplex, des groupes de p éléments successifs, les groupes de m éléments successifs alternant avec les groupes de p éléments successifs.

Dans un premier mode de mise en oeuvre, les éléments du multiplex sont des trames de longueur fixe, découpées en canaux de longueur variable, la composante du programme à embrouiller étant transmise dans un canal de rang déterminé ; on constitue alors le flux élémentaire en prenant les informations contenues dans un canal de rang déterminé i dans les groupes de m trames successives et le flux complémentaire par les informations contenues dans le canal de même rang déterminé i dans des groupes de p trames successives alternant avec lesdits groupes de m trames successives.

Dans une première variante, on embrouille le canal de rang déterminé i des groupes de m trames successives par un premier mot de contrôle CW1 et le canal de même rang i des groupes de p trames successives par un second mot de contrôle CW2.

Le mot de contrôle CW1 peut être le mot de contrôle local connu du récepteur ou un mot de contrôle véhiculé à l'intérieur d'un message de contrôle d'accès.

Dans une autre variante, on n'embrouille pas le canal de rang déterminé i des groupes de m trames successives mais on embrouille le canal de rang déterminé i des groupes de p trames successives par un mot de contrôle (CW2).

Dans un second mode de mise en oeuvre, les éléments du multiplex sont des paquets et on constitue le flux élémentaire par les informations contenues dans des groupes de m paquets successifs et le flux complémentaire par les informations contenues dans des groupes de p paquets successifs alternant avec les groupes de m paquets successifs.

Dans une première variante, on embrouille les paquets des groupes de m paquets successifs par un premier mot de contrôle CW1 et les paquets des groupes de p paquets successifs par un second mot de contrôle CW2.

Dans une seconde variante, on n'embrouille pas les paquets des groupes de m paquets successifs, mais on embrouille les paquets des groupes de p paquets successifs par un mot de contrôle (CW2).

La présente invention a également pour objet un récepteur apte à recevoir les programmes émis selon le procédé qui vient d'être défini. Ce récepteur est caractérisé par le fait qu'il comprend :
- des moyens pour séparer dans le flux d'information reçu un premier flux, dit flux élémentaire, constitué par des groupes de m éléments successifs, et un second flux, dit flux complémentaire, constitué par des groupes de p éléments successifs, les groupes de m éléments successifs alternant avec les groupes de p éléments successifs,
- des moyens pour reconnaître au moins un message de contrôle d'accès dans les informations reçues et pour en extraire au moins un mot de contrôle et au moins une condition d'accès,
- des moyens pour vérifier si au moins ladite condition d'accès est satisfaite,
- des moyens pour désembrouiller au moins le flux complémentaire à l'aide du mot de contrôle associé si la condition d'accès correspondante est satisfaite,
- au moins un récepteur vidéo, audio ou de données recevant au moins les signaux du flux élémentaire et, le cas échéant, les signaux du flux complémentaire désembrouillé si la condition d'accès correspondante est satisfaite.

### Brève description des dessins

- la figure 1 est un diagramme schématique montrant une chaîne de diffusion de télévision à péage ;
- la figure 2 est un schéma montrant l'organisation d'un multiplex conforme à la technique de multiplexage en trames ;
- la figure 3 est un schéma montrant l'organisation d'un multiplex conforme à la technique de multiplexage en paquets ;
- la figure 4 illustre la constitution du flux élémentaire et du flux complémentaire dans le cas d'un multiplex en trames ;
- la figure 5 montre des composantes respectivement embrouillée, dégradée et désembrouillée dans le cas précédent ;
- la figure 6 illustre les moyens permettant de mettre en oeuvre le procédé de l'invention dans le cas du multiplexage en trames ;
- la figure 7 illustre la constitution du flux élémentaire et du flux complémentaire dans le cas d'un multiplex en paquets ;
- la figure 8 montre les composantes respectivement embrouillée, dégradée et désembrouillée dans le cas précédent ;
- la figure 9 illustre les moyens permettant de mettre en oeuvre le procédé de l'invention dans le cas du multiplexage en paquets ;
- la figure 10 montre le schéma synoptique d'un récepteur apte à traiter les signaux diffusés selon le procédé de l'invention ;
- la figure 11 illustre le fonctionnement du démultiplexeur-désembrouilleur dans le cas d'un multiplex tramé ;
- la figure 12 illustre le fonctionnement du démultiplexeur-désembrouilleur dans le cas d'un multiplex en paquets.

### Exposé détaillé de modes de réalisation de l'invention

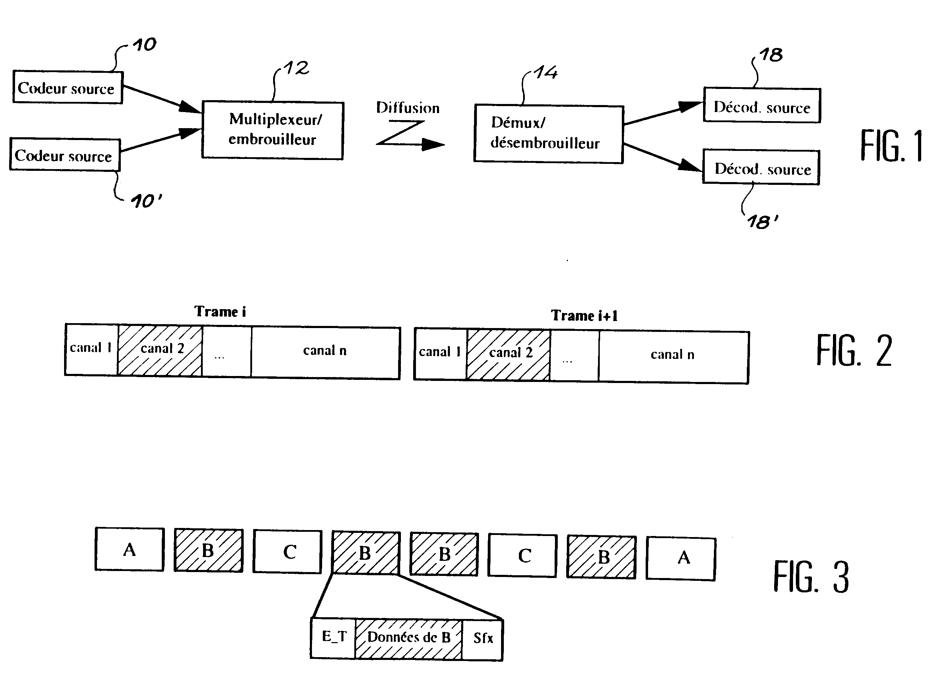

La figure 1 montre une chaîne classique de diffusion de programmes de télévision à péage. Cette chaîne comprend, côté émission, des codeurs source, en l'espèce deux codeurs référencés 10 et 10', un multiplexeur/embrouilleur 12, et, côté réception, un démultiplexeur/désembrouilleur 14 et des décodeurs source, en l'espèce deux décodeurs référencés 18 et 18'.

Les flux d'information issus des codeurs source 10 et 10' alimentent le multiplexeur/embrouilleur 12, qui est chargé de multiplexer et d'embrouiller ces flux afin de délivrer un flux unique qui est le flux diffusé.

L'embrouillage est une opération réversible visant à transformer le signal émis à l'aide d'une clé appelée mot de contrôle (CW), afin de rendre ce programme inintelligible pour les usagers ne possédant pas ce mot de contrôle.

Afin de permettre le désembrouillage , le mot de contrôle est transmis sous forme chiffrée dans des messages de contrôle d'accès appelés ECM. Chaque ECM contient également la condition d'accès (CA) devant être satisfaite par le module de contrôle d'accès de l'usager pour permettre le déchiffrement du mot de contrôle (CW) et, par conséquent, le désembrouillage du signal.

Les mots de contrôle ont une durée de vie limitée (typiquement 10 secondes). Afin d'éviter tout problème lors des changements de mot de contrôle, les deux mots de contrôle respectivement courant et futur sont transmis dans le message de contrôle d'accès. L'un est le mot de contrôle pair utilisé pendant une phase paire et noté CWₑ ; l'autre est le mot de contrôle impair noté CWₒ utilisé pendant une phase impaire.

Les flux d'information issus des codeurs source sont multiplexés temporellement. Deux techniques sont principalement utilisées dans le domaine de la diffusion numérique, le multiplexage en trame et le multiplexage en paquets.

Dans le multiplexage en trames, le multiplex est constitué d'une succession de trames de longueur fixe ayant toutes la même organisation, comme indiqué sur le schéma de la figure 2 qui montre une trame de rang i et la trame suivante de rang i+1.

Une trame est découpée en n canaux de longueur variable. Chaque canal véhicule un flux élémentaire (vidéo, son, ...). La même découpe est utilisée pour toutes les trames (des reconfigurations de multiplex sont possibles mais rares). Le débit alloué à un canal de rang k est égal à (Lgk)/Tbits/s, où Lgk est la longueur du canal k en bits et T la période de la trame.

A titre d'exemple, on peut citer le multiplex STERNE qui est un multiplex tramé. La longueur d'une trame est de 24ms. Le débit alloué à un canal qui aurait une longueur de 1 octet serait environ égal à 333 bits/s.

En général, un canal est réservé pour véhiculer une voie de service décrivant tous les autres canaux de la trame : longueur du canal, description du flux élémentaire transporté dans le canal, paramètres d'embrouillage et de contrôle d'accès, ...

La voie de service transporte également un compteur de trames utilisé par exemple pour fixer la durée de vie des mots de contrôle ainsi que la parité de la phase.

L'embrouillage d'un flux élémentaire se fait actuellement en embrouillant, dans toutes les trames, tous les bits du canal véhiculant le flux élémentaire. Sur la figure 2, l'embrouillage porte sur le canal 2 et il est symbolisé par les hachures.

Quant au multiplexage en paquets, il consiste à produire une succession de paquets de longueur fixe ou variable. Chaque paquet contient les données d'un flux élémentaire. Le schéma de la figure 3 donne un exemple de multiplex en paquets, véhiculant trois flux élémentaires A, B et C.

Chaque paquet est constitué d'un en-tête (E-T), d'un champ de données et d'un suffixe (Sfx).

L'embrouillage d'un flux élémentaire se fait actuellement en embrouillant tous les champs de données des paquets véhiculant ce flux élémentaire. Dans l'exemple illustré sur la figure 3, seul le flux élémentaire B est embrouillé (les hachures symbolisent l'embrouillage).

A titre d'exemple, le multiplex MPEG2 est un multiplex par paquets dans lequel les paquets ont tous une longueur fixe de 188 octets. L'en-tête contient un identifiant du flux élémentaire, plus deux bits précisant le mode et les paramètres d'embrouillage utilisés pour ce paquet. Les valeurs de ces deux bits sont actuellement normalisées :
- 00 :: pas d'embrouillage
- 01 :: réservé
- 10 :: embrouillage avec le mot de contrôle pair
- 11 :: embrouillage avec le mot de contrôle impair.

Dans la demande de brevet n°92 15841 (US 08/172,817) déjà citée, il est décrit comment mettre en oeuvre un mécanisme d'embrouillage progressif dans le cas où la composante (vidéo ou audio) se présente en deux flux discernables. Il suffit, dans ce cas, d'appliquer un mot de contrôle CW1 (associé à une condition d'accès CA1) au flux élémentaire et un mot de contrôle CW2 (associé à une condition d'accès CA2) au flux complémentaire. La condition d'accès CA1 et le cryptogramme de CW1 sont transportés dans un message de contrôle d'accès ECM1. La condition d'accès CA2 et le cryptogramme de CW2 sont transportés dans un message de contrôle d'accès ECM2. La seule condition d'accès CA1 permet le désembrouillage du flux élémentaire, fournissant ainsi une image ou un son dégradé mais compréhensible pour l'usager.

On décrit maintenant comment précisément produire deux flux discernables, embrouillés respectivement avec les mots de contrôle CW1 et CW2, dans le cas d'un multiplex tramé et d'un multiplex en paquets.

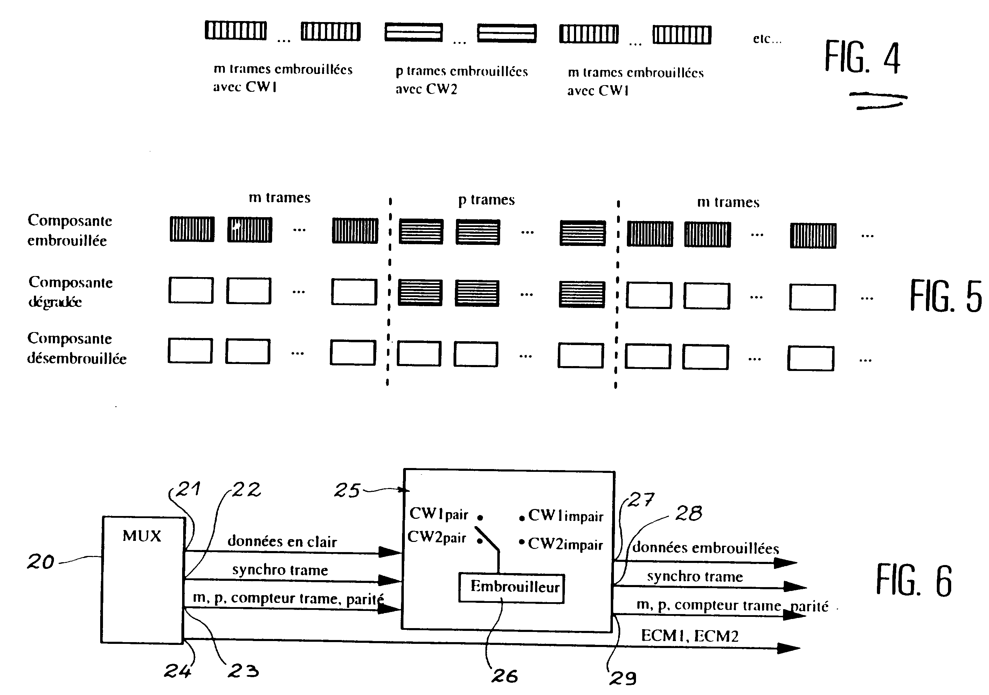

Dans le cas du multiplex tramé tout d'abord, la composante sur laquelle on souhaite appliquer l'embrouillage progressif est transmise dans le canal i de chaque trame. Le procédé de l'invention consiste alors à embrouiller le canal i de m trames successives avec le mot CW1, puis le même canal de p trames successives avec CW2, puis à nouveau le même canal de m trames successives avec CW1, etc ... comme indiqué sur le schéma de la figure 4 où les traits verticaux symbolisent un embrouillage avec CW1 et les traits horizontaux un embrouillage avec CW2.

Les mots CW1 et CW2 changent de parité en même temps. Cette parité n'est pas indiquée sur le schéma de la figure 4.

Les valeurs des nombres m et p, propres à chacun des canaux embrouillés doivent être connues du décodeur de façon implicite ou explicite. Dans ce dernier cas, elles sont transmises dans la voie de service, accompagnées d'une information de synchronisation (par exemple une valeur particulière du compteur de trame) signalant à quelle trame commence l'embrouillage avec CW1 ou avec CW2.

A la réception le flux élémentaire est obtenu en désembrouillant les trames embrouillées avec CW1. Le flux complémentaire est obtenu en désembrouillant les trames embrouillées avec CW2. L'envoi au décodeur vidéo ou audio d'un seul flux élémentaire donne une image ou un son dégradé. L'envoi au décodeur vidéo ou audio du flux élémentaire accompagné du flux complémentaire donne une image ou un son de qualité.

La figure 5 montre, sur la première ligne, la composante embrouillée, sur la deuxième ligne la composante dégradée lorsque seul le flux élémentaire a été désembrouillé et, sur la troisième ligne, la composante complètement désembrouillée.

Le choix des nombres m et p doit être fixé en fonction des performances du décodeur vidéo ou audio et notamment en fonction de son temps d'accrochage. En règle générale, m est très supérieur à p car il faut très peu de trames embrouillées pour perturber fortement le comportement du décodeur vidéo ou audio.

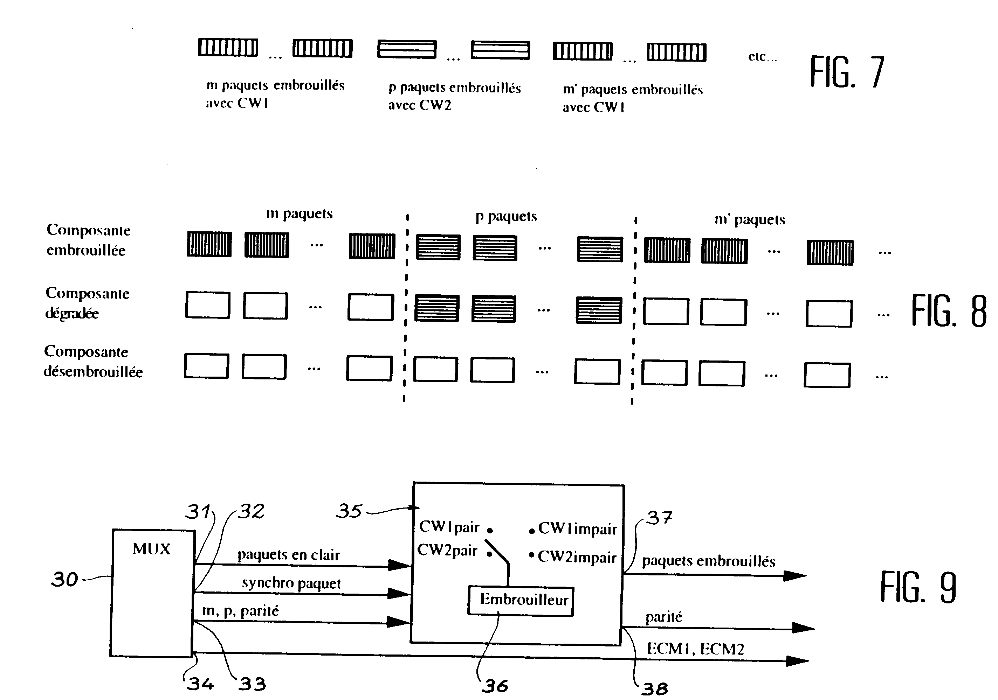

Les moyens utilisés à l'émission sont représentés sur la figure 6. Ils comprennent un multiplexeur 20 avec une première sortie 21 délivrant les données en clair, une seconde sortie délivrant la synchronisation de trame, une troisième sortie délivrant les nombres m et p ainsi que le compteur de trame et la parité, et enfin une quatrième sortie 24 délivrant deux messages de contrôle d'accès ECM1, ECM2.

Les moyens comprennent encore un circuit 25 contenant les mots de contrôle utilisés (CW1 pair et impair et CW2 pair et impair) et l'embrouilleur 26 qui utilise l'un ou l'autre de ces mots. Ce circuit 25 délivre, sur une première sortie 27, les données embrouillées, sur une deuxième sortie 28, la synchronisation de trame, sur une troisième sortie 29, les nombres m, p ainsi que le compteur trame et la parité.

S'agissant maintenant du multiplex en paquets, le cas est proche de celui du multiplex en trames, la différence résidant dans la transmission des informations de synchronisation entre l'embrouilleur et le désembrouilleur. En effet, dans la cas du multiplex paquets, l'en-tête paquet peut être utilisé pour véhiculer l'information : c'est dans l'en-tête paquet que sera envoyée l'information d'embrouillage avec CW1 ou avec CW2, ainsi que la parité. Ceci permet, en particulier, à l'embrouilleur de faire varier les valeurs m et p.

Le nombre m peut, par exemple, correspondre au nombre de paquets nécessaire au codage d'une image intra tandis que le nombre p peut correspondre au nombre de paquets entre deux images intra.

On peut remarquer que l'embrouillage du flux élémentaire avec le mot de contrôle CW1 n'est pas obligatoire. Dans une variante simplifiée, on n'embrouille pas le canal de rang i des groupes de m trames successives ; on n'embrouille que le canal de rang i des groupes de p trames successives et ceci avec le mot de contrôle CW2. On ne définit donc pas de conditions d'accès CA1 et on n'utilise pas le mot de contrôle CW1. Ceci revient à n'exercer aucun contrôle sur la réception du flux élémentaire et à offrir à tous les récepteurs l'accès à l'image ou au son dégradés.

On peut remarquer encore, comme plus haut, que le mot de contrôle CW1 peut être le mot de contrôle local connu du récepteur ou un mot de contrôle véhiculé à l'intérieur d'un message de contrôle d'accès.

La figure 7 montre comment l'on constitue le flux élémentaire avec des groupes de m paquets qui seront embrouillés avec le premier mot de contrôle CW1, et des groupes de p paquets qui seront embrouillés avec le second mot de contrôle CW2. Les traits verticaux symbolisent l'embrouillage avec CW1 et les traits horizontaux l'embrouillage avec CW2.

A la réception, le flux élementaire sera obtenu en désembrouillant les paquets embrouillés avec CW1. Le flux complémentaire sera obtenu en désembrouillant les paquets embrouillés avec CW2. L'envoi au décodeur vidéo ou audio d'un seul flux élémentaire donnera une image ou un son dégradé. L'envoi au décodeur vidéo ou audio du flux élémentaire accompagné du flux complémentaire donnera une image ou un son de qualité.

La figure 8 montre, sur la première ligne, la composante embrouillée, sur la deuxième ligne, la composante dégradée correspondant au seul flux élémentaire désembrouillé, et, sur la troisième ligne, la composante complètement désembrouillée (flux élementaire et flux complémentaire).

Là encore, le choix de m et de p doit être fixé en fonction des performances du décodeur vidéo ou audio et notamment en fonction de son temps d'accrochage. En règle générale, m sera très supérieur à p, car il faut très peu de paquets embrouillés pour perturber fortement le comportement du décodeur vidéo ou audio.

La figure 9 montre schématiquement les moyens utilisés à l'émission, dans la variante à multiplexage en paquets. Ces moyens comprennent un multiplexeur 30 qui délivre, sur une première sortie 31, les paquets en clair, sur une deuxième sortie 32, la synchronisation de paquets, sur une troisième sortie 33, les nombres m et p ainsi que la parité et sur une quatrième sortie 34, les messages de contrôle d'accès ECM1, ECM2.

Ces moyens comprennent encore un circuit 35 contenant les mots de contrôle CW1 pair et impair et les mots de contrôle CW2 pair et impair, et l'embrouilleur 36 utilisant ces mots. Le circuit 35 délivre, sur une première sortie 37, les paquets embrouillés et, sur une seconde sortie 38, un signal de parité.

Dans le multiplexage en paquets comme dans le multiplexage en trame, un cas particulier de mise en oeuvre du procédé consiste à ne pas définir de condition d'accès CA1 et à ne pas utiliser le mot de contrôle CW1. Ceci revient à n'exercer aucun contrôle sur la réception du flux élementaire et à offrir à tous les récepteurs l'accès à l'image ou au son dégradés. On peut aussi utiliser, comme mot de contrôle CW1, le mot de contrôle local connu du récepteur ou un mot de contrôle véhiculé à l'intérieur d'un message de contrôle d'accès.

Pour finir, on peut préciser un mode de mise en oeuvre du procédé de l'invention dans le cas du multiplexage dit MPEG2.

Dans le cas particulier de MPEG2, la signalisation propre à l'embrouillage dans l'en-tête de chaque paquet est constituée de deux bits appelés "Transport-Scrambling-Control" (TSC) dans le projet de norme MPEG2 Système (ISO/IEC CD 13818-1). Les valeurs de ces deux bits sont actuellement normalisées :
00 : le paquet n'est pas embrouillé
01 : est réservé
10 : le paquet est embrouillé avec le mot de contrôle pair
11 : le paquet est embrouillé avec le mot de contrôle impair.

Afin de mettre en oeuvre le procédé décrit ci-dessus, il faut pouvoir signaler au décodeur non plus deux mots de contrôle (pair ou impair), mais en tout, quatre mots de contrôle (CW1 pair, CW2 pair, CW1 impair, CW2 impair). Il faut pouvoir indiquer lequel de ces quatre mots de contrôle a été utilisé pour embrouiller le champ de données du paquet. Pour cela, on peut utiliser la valeur "01" aujourd'hui réservée.

Le comportement du décodeur est alors le suivant (le comportement du codeur s'en déduit aisément). On suppose que le décodeur dispose d'une mémoire de parité (1 bit suffit) baptisée MEM-PAR :
- Etat initial : MEM-PAR=0 ou 1
- Réception d'un paquet avec TSC="00" : aucune action de désembrouillage n'est à entreprendre
- Réception d'un paquet avec TSC="10" :
   désembrouillage du paquet avec CW2 pair et MEM-PAR→0 (c'est-à-dire stocker la valeur "0" dans MEM-PAR)
- Réception d'un paquet avec TSC="11" :
   désembrouillage du paquet avec CW2 impair et MEM-PAR→1 (c'est-à-dire stocker la valeur "1" dans MEM-PAR)
- Réception d'un paquet avec TSC="01" :
   désembrouillage du paquet avec CW1 pair si MEM-PAR=0 ou avec CW1 impair si MEM-PAR=1.

Au branchement du récepteur, le contenu de la mémoire de parité MEM-PAR a une probabilité 1/2 d'être erroné jusqu'à réception du premier paquet avec TSC="10" ou "11". Le temps d'attente maximum avant d'être parfaitement synchronisé est de m paquets. Il est donc nécessaire, dans la mise en oeuvre de cette variante, de s'assurer que ce délai n'est pas perceptible pour l'utilisateur (valeur de m la plus faible possible).

On remarquera que le cas particulier de mise en oeuvre du procédé consistant à ne pas définir de condition d'accès CA1 et à ne pas utiliser le mot de contrôle CW1 est facilement réalisable en utilisant la valeur TSC="00" au lieu de TSC="01".

Le décodeur ayant uniquement accès à l'image dégradée peut fonctionner selon plusieurs modes :
- envoyer au décodeur vidéo les images désembrouillées ainsi que les images restant embrouillées,
- envoyer au décodeur vidéo uniquement les images désembrouillées, et le décodeur vidéo gèle la dernière image reçue pendant la réception des images embrouillées.

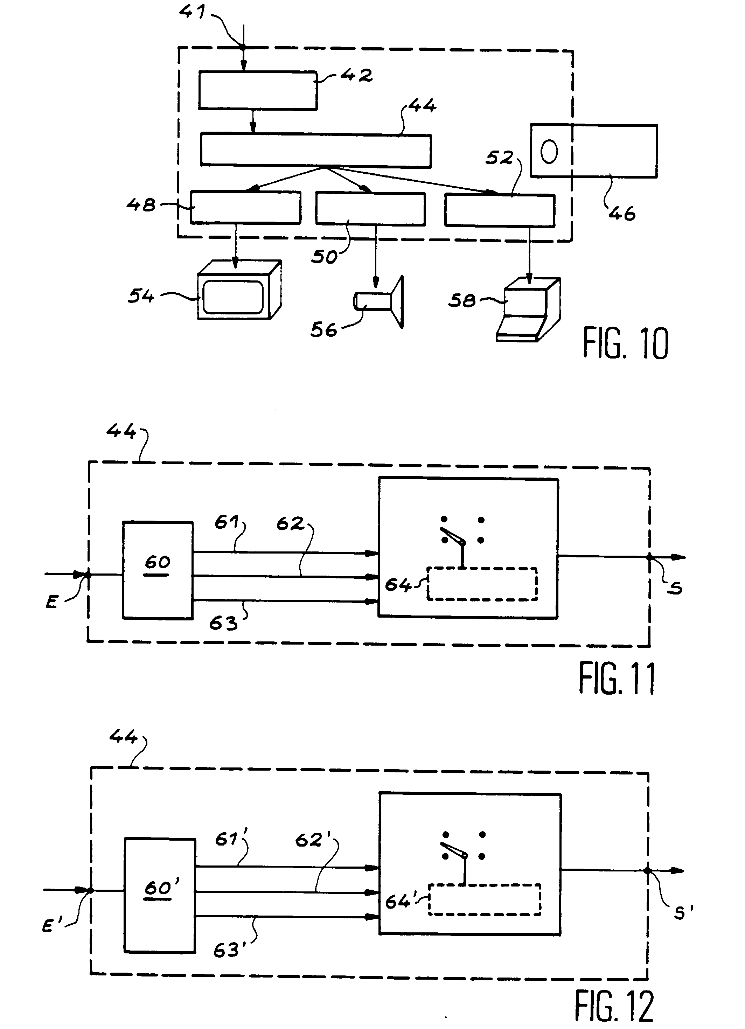

La figure 10 illustre schématiquement un récepteur apte à recevoir les programmes émis selon le procédé qui a été décrit. Sur cette figure, le récepteur porte la référence générale 40. Ce récepteur comprend une entrée générale 41, un démodulateur 42, un démultiplexeur-désembrouilleur 44, un processeur de sécurité 46, un décodeur vidéo 48, un décodeur audio 50, un décodeur de données 52, un écran d'affichage 54, un haut-parleur 56 et un ordinateur personnel 58.

Le signal reçu sur l'entrée 41 est d'abord démodulé dans le circuit 42 puis envoyé au démultiplexeur/désembrouilleur 44 qui extrait les trames ou paquets de la composante sélectionnée et les désembrouille si l'usager dispose des droits d'accès requis.

Le signal est ensuite envoyé au décodeur vidéo 48 s'il s'agit d'un signal vidéo, au décodeur audio 50 s'il s'agit d'un signal audio, ou au décodeur de données 52 s'il s'agit d'un signal de données. Une fois le signal décodé, il est présenté à l'usager sur le support adapté : écran 54 pour la vidéo, haut-parleur 56 pour audio et ordinateur 58 pour les données.

Dans le cas d'un multiplex tramé, le demultiplexeur-désembrouilleur 44 est organisé selon la figure 11.

L'entrée générale E est reliée à un démultiplexeur de trame 60 possédant trois sorties, respectivement 61 pour les données embrouillées 62, pour la synchronisation de trame et 63 pour les nombres m et p, le compteur de trame et la parité.

Le désembrouilleur 64 reçoit soit les mots de contrôle pair CW1 ou CW2, soit. les mots de contrôle impairs CW1, CW2 selon la parité et désembrouille les signaux. Les signaux en clair sont disponibles sur la sortie S.

Le démultiplexeur/désembrouilleur analyse la voie de service pour y récupérer (s'il ne les connaît pas de manière implicite) les valeurs de m, de p ainsi que l'information de synchronisation signalant à quelle trame commence l'embrouillage avec CW1 ou avec CW2.

Le démultiplexeur/désembrouilleur récupère les ECM1 et les ECM2 . Il envoie ces ECM au processeur de sécurité du décodeur (souvent une carte à microprocesseur) pour vérifications des conditions d'accès CA1 et CA2 et calcul des mots de contrôle CW1 et CW2 si les conditions d'accès sont respectées.

Si l'usager ne satisfait ni CA1 ni CA2, la composante reste entièrement embrouillée.

Si l'usager satisfait la condition d'accès CA1, mais pas la condition d'accès CA2, il a accès à une image ou un son ou des données dégradées. Le démultiplexeur/désembrouilleur désembrouille les salves de m trames embrouillées avec CW1. Il engendre ainsi un flux constitué de m trames en clair, puis p trames embrouillées, puis à nouveau m trames en clair, etc... Ce flux est envoyé au décodeur vidéo ou audio ou de données.

Si la composante est une composante audio, le décodeur audio peut tout décoder (le décodage des trames embrouillées se traduira par du bruit sur le haut-parleur) ou peut décider de ne pas décoder les salves de p trames restant embrouillées (pas de son sur le haut-parleur pendant le passage de ces trames).

Si la composante est une composante vidéo, le décodeur vidéo peut tout décoder (le décodage des trames embrouillées se traduira par une image bruitée sur l'écran) ou peut décider de ne pas décoder les salves de p trames restant embrouillées et de geler sur l'écran pendant ce temps la dernière image correctement décodée.

Si l'usager satisfait les conditions d'accès CA1 et CA2, il a accès à une image ou un son ou des données complètement désembrouillées.

Le démultiplexeur/désembrouilleur désembrouille les salves de trames embrouillées avec CW1 et les salves de p trames embrouillées avec CW2. Il engendre ainsi un flux constitué de trames complètement désembrouillées. Ce flux est envoyé au décodeur vidéo ou audio ou données.

Un cas particulier consiste à ne pas définir de condition d'accès CA1 et à ne pas utiliser le mot de contrôle CW1 (les salves de m trames sont en clair). Ceci revient à n'exercer aucun contrôle sur la réception du flux élémentaire et à offrir à tous les récepteurs l'accès à l'image ou au son dégradé.

Dans le cas d'un multiplex par paquets, le démultiplexeur-désembrouilleur 44 est organisé selon la figure 12. L'entrée E' est reliée à un démultiplexeur de paquets 60' possédant trois sorties, respectivement 61' délivrant les paquets embrouillés, 62' pour la synchronisation de paquets et 63' pour les nombres m et p et pour la parité.

Le désembrouilleur 64' reçoit soit les mots de contrôle pair CW1 ou CW2, soit les mots de contrôle impairs CW1, CW2, selon la parité, et désembrouille les signaux. Les signaux en clair sont disponibles sur la sortie S'.

Le démultiplexeur/désembrouilleur récupère les ECM1 et les ECM2. Il envoie ces ECM au processeur de sécurité du décodeur (souvent une carte à microprocesseur) pour vérifications des conditions d'accès CA1 et CA2 et calcul des mots de contrôle CW1 et CW2 si les conditions d'accès sont respectées.

Si l'usager ne satisfait ni CA1, ni CA2, la composante reste entièrement embrouillée.

Le démultiplexeur/désembrouilleur analyse l'en-tête des paquets pour savoir avec quel CW il faut désembrouiller le paquet (CW1 pair, CW1 impair, CW2 pair, CW2 impair).

Si l'usager satisfait la condition d'accès CA1, mais pas la condition d'accès CA2, il a accès à une image ou son ou données dégradé selon le mécanisme ci-dessous.

Le démultiplexeur/désembrouilleur désembrouille les salves de m paquets embrouillés avec CW1. Il engendre ainsi un flux constitué de m paquets en clair, puis p paquets embrouillés, puis à nouveau m paquets en clair, etc... Ce flux est envoyé au décodeur vidéo ou audio ou de données.

Si la composante est une composante audio, le décodeur audio peut tout décoder (le décodage des paquets embrouillés se traduira par du bruit sur le haut-parleur) ou peut décider de ne pas décoder les salves de p paquets restant embrouillés (pas de son sur le haut-parleur pendant le passage de ces paquets).

Si la composante est une composante vidéo, le décodeur vidéo peut tout décoder (le décodage des paquets embrouillés se traduira par une image bruitée sur l'écran) ou peut décider de ne pas décoder les salves de p paquets restant embrouillés et de geler sur l'écran pendant ce temps la dernière image correctement décodée.

Si l'usager satisfait les conditions d'accès CA1 et CA2, il a accès à une image ou un son ou des données complètement désembrouillés.

Le démultiplexeur/désembrouilleur désembrouille les salves de paquets embrouillées avec CW1 et les salves de paquets embrouillées avec CW2. Il engendre ainsi un flux constitué de paquets complètement désembrouillés. Ce flux est envoyé au décodeur vidéo ou audio ou données.

Un cas particulier de mise en oeuvre consiste à ne pas définir de condition d'accès CA1 et à ne pas utiliser le mot de contrôle CW1 (les salves de m paquets sont en clair). Ceci revient à n'exercer aucun contrôle sur la réception du flux élémentaire et à offrir à tous les récepteurs l'accès à l'image ou au son dégradés.

## Revendications

1. Procédé de diffusion de programmes à accès conditionnel progressif, dans lequel : r
- on sépare un flux d'information correspondant à une composante d'un programme en un premier flux, dit flux élémentaire et en un second flux, dit flux complémentaire,
- on embrouille au moins le flux complémentaire à l'aide d'un mot de contrôle (CW2),
- de manière synchrone avec chaque programme, on transmet des messages de contrôle d'accès (ECM) permettant de désembrouiller et de restituer les flux embrouillés dans des récepteurs disposant des droits d'accès correspondants, la restitution du seul flux élémentaire conduisant à une composante de programme discernable sans être directement utilisable, le désembrouillage du flux complémentaire permettant de compléter la composante du programme pour permettre de restituer complétement le programme,
- le flux d'information étant sous forme de multiplex numérique constitué d'une suite d'éléments, on constitue le flux élémentaire en prenant, dans le multiplex, des groupes de m éléments successifs et on constitue le flux complémentaire en prenant, dans le multiplex, des groupes de p éléments successifs, les groupes de m éléments successifs alternant avec les groupes de p éléments successifs.

2. Procédé selon la revendication 1, caractérisé par le fait que les éléments du multiplex sont des trames de longueur fixe, découpées en canaux de longueur variable, la composante du programme à embrouiller étant transmise dans un canal de rang déterminé et par le fait qu'on constitue le flux élémentaire en prenant les informations contenues dans le canal ayant ce rang déterminé (i) dans les groupes de m trames successives et le flux complémentaire par les informations contenues dans le canal de même rang déterminé (i) dans des groupes de p trames successives alternant avec lesdits groupes de m trames successives.

3. Procédé selon la revendication 2, caractérisé par le fait qu'on embrouille le canal de rang déterminé (i) des groupes de m trames successives par un premier mot de contrôle (CW1) et le canal de même rang (i) des groupes de p trames successives par un second mot de contrôle (CW2).

4. Procédé selon la revendication 3, caractérisé par le fait que le premier mot de contrôle (CW1) est un mot de contrôle connu du récepteur ou véhiculé à l'intérieur d'un message de contrôle d'accès.

5. Procédé selon la revendication 2, caractérisé par le fait qu'on n'embrouille pas le canal de rang déterminé (i) des groupes de m trames successives mais qu'on embrouille le canal de rang déterminé (i) des groupes de p trames successives par un mot de contrôle (CW2).

6. Procédé selon l'une quelconque des revendications 3 ou 5, caractérisé par le fait que l'on transmet, avec les messages de contrôle d'accès, la valeur des nombres m et p, ainsi qu'une information indiquant à partir de quelle trame commence l'embrouillage avec le premier ou le second mot de contrôle (CW1, CW2).

7. Procédé selon la revendication 1, caractérisé par le fait que les éléments du multiplex sont des paquets et qu'on constitue le flux élémentaire par les informations contenues dans des groupes de m paquets successifs et le flux complémentaire par les informations contenues dans les groupes de p paquets successifs alternant avec les groupes de m paquets successifs.

8. Procédé selon la revendication 7, caractérisé par le fait qu'on embrouille les paquets des groupes de m paquets successifs par un premier mot de contrôle (CW1) et les paquets des groupes de p paquets successifs par un second mot de contrôle (CW2).

9. Procédé selon la revendication 8, caractérisé par le fait que le premier mot de contrôle (CW1) est un mot de contrôle connu du récepteur ou véhiculé à l'intérieur d'un message de contrôle d'accès.

10. Procédé selon la revendication 7, caractérisé par le fait qu'on n'embrouille pas les paquets des groupes de m paquets successifs mais qu'on embrouille les paquets des groupes de p paquets successifs par un mot de contrôle (CW2).

11. Procédé selon l'une quelconque des revendications 8 ou 10, caractérisé par le fait que, chaque paquet comprenant un en-tête, on transmet une information relative au mot de contrôle utilisé (CW1, CW2) dans l'en-tête de paquet.

12. Procédé selon la revendication 7, caractérisé par le fait que les couches m et p sont variables.

13. Procédé selon la revendication 3 ou selon la revendication 8, caractérisé par le fait que :
- chaque mot de contrôle utilisé (CW1, CW2) possède une durée de vie limitée à une période de temps appelée phase, les phases successives étant alternativement paires et impaires, le message de contrôle d'accès (EMC1, EMC2) relatif à un mot de contrôle (CW1, CW2) comprenant à la fois le mot de contrôle courant de la phase courante et le mot de contrôle futur de la phase suivante, l'un étant appelé mot pair (CWₑ) et étant utilisé pendant une phase paire, l'autre étant appelé mot impair (CW₀) et étant utilisé pendant une phase impaire,
- les premier et second mots de contrôle (CW1, CW2) changent de parité en même temps,
- quatre mots de contrôle sont mis en oeuvre, à savoir les mots pair et impair (CW1ₑ, CW1₀) relatifs au premier mot de contrôle (CW1) et les mots pair et impair (CW2ₑ, CW2₀) relatifs au second mot de contrôle (CW2),
- on transmet une information de parité relative aux mots de contrôle utilisés.

14. Récepteur adapté à recevoir des programmes à accès conditionnel progressif émis selon le procédé de la revendication 1, et comprenant :
- des moyens (60, 60') pour séparer dans le flux d'information reçu un premier flux, dit flux élémentaire, constitué par des groupes de m éléments successifs, et un second flux, dit flux complémentaire, constitué par des groupes de p éléments successifs, les groupes de m éléments successifs alternant avec les groupes de p éléments successifs,
- des moyens (46) pour reconnaître au moins un message de contrôle d'accès (ECM) dans les informations reçues et pour en extraire au moins un mot de contrôle (CW) et au moins une condition d'accès (CA),
- des moyens (46) pour vérifier si au moins ladite condition d'accès (CA) est satisfaite,
- des moyens (64, 64') pour désembrouiller au moins le flux complémentaire à l'aide du mot de contrôle associé (CW2), si la condition d'accès correspondante (CA2) est satisfaite,
- au moins un récepteur vidéo (54) audio (56) ou de données (58) recevant au moins les signaux du flux élémentaire et, le cas échéant, les signaux du flux complémentaire désembrouillé si la condition d'accès correspondante est satisfaite.

15. Récepteur selon la revendication 14, caractérisé par le fait que :
- les moyens (46) pour reconnaître les messages de contrôle d'accès (ECM) sont aptes à reconnaître deux messages de contrôle d'accès (ECM1, ECM2) et à restituer deux mots de contrôle (CW1, CW2) et deux conditions d'accès (CA1, CA2),
- les moyens (46) pour vérifier si au moins une condition d'accès est satisfaite sont aptes à vérifier si les deux conditions d'accès (CA1, CA2) sont satisfaites,
- les moyens (64, 64') pour désembrouiller au moins le flux complémentaire à l'aide du second mot de contrôle (CW2) sont aptes en outre à désembrouiller le flux élémentaire à l'aide du premier mot de contrôle (CW1).

16. Récepteur selon la revendication 14, caractérisé par le fait que :
- les moyens (46) pour reconnaître au moins un message de contrôle d'accès (ECM) sont aptes à reconnaître un seul message de contrôle d'accès (ECM2) et à restituer un seul mot de contrôle (CW2) et une seule condition d'accès (CA2),
- les moyens (46) pour vérifier si au moins une condition d'accès est satisfaite vérifie seulement si ladite condition (CA2) est satisfaite,
- les moyens (64, 64') pour désembrouiller au moins le flux complémentaire désembrouille uniquement ledit flux à l'aide du seul mot de contrôle restitué (CW2).

17. Récepteur selon la revendication 16, caractérisé par le fait que les moyens (64, 64') pour désembrouiller au moins le flux complémentaire sont aptes en outre à désembrouiller le flux élémentaire à l'aide d'un mot de contrôle connu du récepteur.

18. Récepteur selon la revendication 14, caractérisé par le fait que les moyens (46) aptes à reconnaître au moins un message de contrôle d'accès sont aptes à extraire quatre mots de contrôle, à savoir : des premier et second mots pairs (CW1 pair, CW2 pair) et des premier et second mots impairs (CW1 impair, CW2 impair), le récepteur comprenant en outre une mémoire de parité à au moins un bit (MEM-PAR) et un moyen de reconnaissance de l'état d'un groupe de deux bits reçus (TSC).

19. Récepteur selon l'une quelconque des revendications 14 à 18, caractérisé par le fait que les récepteurs vidéo (54), audio (56) ou de données (58) reçoivent reçoit à la fois les signaux désembrouillés et les signaux embrouillés.

20. Récepteur selon l'une quelconque des revendications 14 à 18, caractérisé par le fait que les récepteurs vidéo (54), audio (56) ou de données (58) ne reçoivent que les signaux désembrouillés.

## Patentansprüche

1. Verfahren zur Programmverteilung mit progressivem bedingtem Zugriff, das die folgenden Schritte umfaßt:
- Trennung eines einer Komponente eines Programms entsprechenden Informationsstroms in einen ersten Strom, Elementarstrom genannt, und einen zweiten Strom, Komplementärstrom genannt,
- Verschlüsselung wenigstens des Komplementärstroms mit Hilfe eines Kontrollworts (CW2),
- Übertragung, synchron mit jedem Programm, von Zugriffkontrollnachrichten (ECM), die ermöglichen, die verschlüsselten Ströme in Empfängern, die über entsprechende Zugriffsrechte verfügen, zu entschlüsseln und wiederherzustellen, wobei die Wiederherstellung nur des Elementarstroms zu einer Programmkomponente führt, die erkennbar ist ohne direkt brauchbar zu sein, und die Entschlüsselung des Komplementärstroms ermöglicht, die Programmkomponente zu vervollständigen, um das Programm vollständig wiederherzustellen,
- Bildung des Elementarstroms - wobei der Informationsstrom die Form eines aus einer Folge von Elementen bestehenden digitalen Multiplex hat -, indem man dem Multiplex Gruppen von m aufeinanderfolgenden Elementen entnimmt, und Bildung des Komplementärstroms, indem man dem Multiplex Gruppen von p aufeinanderfolgenden Elementen entnimmt, wobei die Gruppen von m aufeinanderfolgenden Elementen mit den Gruppen von p aufeinanderfolgenden Elementen abwechseln.

2. Verfahren nach Anspruch 1, dadurch gekennzeichnet, daß die Elemente des Multiplex Datenübertragungsblöcke von fester Länge sind, aufgeteilt in Kanälen von variabler Länge, wobei die Komponente des zu verschlüsselnden Programms in einem Kanal eines festgelegten Rangs übertragen wird, und dadurch, daß man den Elementarstrom bildet, indem man die Informationen nimmt, die enthalten sind in dem Kanal, der in den Gruppen von m aufeinanderfolgenden Übertragungsblöcken diesen festgelegten Rang (i) hat, und den Komplementärstrom durch die Informationen, die enthalten sind in dem Kanal desselben festgelegten Rangs (i) in den Gruppen von p aufeinanderfolgenden Übertragungsblöcken, abwechselnd mit den genannten Gruppen von m aufeinanderfolgenden Übertragungsblöcken.

3. Verfahren nach Anspruch 2, dadurch gekennzeichnet, daß man den Kanal des festgelegten Rangs (i) der Gruppen von m aufeinanderfolgenden Übertragungsblöcken durch ein erstes Kontrollwort (CW1) verschlüsselt und den Kanal desselben Rangs (i) der Gruppen von p aufeinanderfolgenden Übertragungsblöcken durch ein zweites Kontrollwort (CW2).

4. Verfahren nach Anspruch 3, dadurch gekennzeichnet, daß das erste Kontrollwort (CW1) ein Kontrollwort ist, das dem Empfänger bekannt ist oder innerhalb einer Zugriffskontrollnachricht übertragen wird.

5. Verfahren nach Anspruch 2, dadurch gekennzeichnet, daß man den Kanal des festgelegten Rangs (i) der Gruppen von m aufeinanderfolgenden Übertragungsblöcken nicht verschlüsselt, aber den Kanal des festgelegtem Rangs (i) der Gruppen von p aufeinanderfolgenden Übertragungsblöcken durch ein Kontrollwort (CW2) verschlüsselt.

6. Verfahren nach einem der Ansprüche 3 oder 5, dadurch gekennzeichnet, daß man mit den Zugriffskontrollnachrichten den Wert der Zahlen m und p sowie eine Information überträgt, die angibt, ab welchem Übertragungsblock die Verschlüsselung mit dem ersten oder dem zweiten Kontrollwort (CW1, CW2) beginnt.

7. Verfahren nach Anspruch 1, dadurch gekennzeichnet, daß die Elemente des Multiplex Pakete sind und daß man den Elementarstrom durch die Informationen bildet, die enthalten sind in den Gruppen von m aufeinanderfolgenden Paketen, und den Komplementärstrom durch Informationen, die enthalten sind in den Gruppen von p aufeinanderfolgenden Paketen, abwechselnd mit den Gruppen von m aufeinanderfolgenden Paketen.

8. Verfahren nach Anspruch 7, dadurch gekennzeichnet, daß man die Pakete der Gruppen von m aufeinanderfolgenden Paketen durch ein erstes Kontrollwort (CW1) verschlüsselt und die Pakete der Gruppen von p aufeinanderfolgenden Paketen durch ein zweites Kontrollwort (CW2).

9. Verfahren nach Anspruch 8, dadurch gekennzeichnet, daß das erste Kontrollwort (CW1) ein Kontrollwort ist, das dem Empfänger bekannt ist oder innerhalb einer Zugriffskontrollnachricht übertragen wird.

10. Verfahren nach Anspruch 7, dadurch gekennzeichnet, daß man die Pakete der Gruppen von m aufeinanderfolgenden Paketen nicht verschlüsselt, aber die Pakete der Gruppen von p aufeinanderfolgenden Paketen durch ein Kontrollwort (CW2) verschlüsselt.

11. Verfahren nach einem der Ansprüche 8 oder 10, dadurch gekennzeichnet, daß man in dem Kopf bzw. Vorspann, den jedes Paket umfaßt, eine das benutzte Kontrollwort (CW1, CW2) betreffende Information überträgt.

12. Verfahren nach Anspruch 7, dadurch gekennzeichnet, daß die Schichten m und p variabel sind.

13. Verfahren nach Anspruch 3 oder nach Anspruch 8, dadurch gekennzeichnet:
- daß jedes benutzte Kontrollwort (CW1, CW2) eine begrenzte Lebensdauer mit einer Phase genannten Zeitperiode hat, wobei die aufeinanderfolgenden Phasen abwechselnd gerade und ungerade sind und die ein Kontrollwort (CW1, CW2) betreffende Zugriffskontrollnachricht (EMC1, EMC2) zugleich das laufende Kontrollwort der laufenden Phase und das zukünftige Kontrollwort der nächsten Phase umfaßt, wobei das eine, gerades Wort (CWₑ) genannt, während einer geraden Phase benutzt wird, und das andere, ungerades Wort (CW₀) genannt, während einer ungeraden Phase benutzt wird,
- daß das erste und das zweite Kontrollwort (CW1, CW2) gleichzeitig die Parität ändern,
- daß vier Kontrollwörter benutzt werden, nämlich, das erste Kontrollwort (CW1) betreffend, das gerade und das ungerade Wort (CW1ₑ, CW1ₒ) und, das zweite Kontrollwort (CW2) betreffend, das gerade und das ungerade Wort (CW2ₑ, CW2ₒ)
- daß man eine die benutzten Kontrollwörter betreffende Information überträgt.

14. Empfänger für den Empfang von Programmen mit progressivem bedingtem Zugriff, gesendet nach dem Verfahren des Anspruchs 1 und umfassend:
- Einrichtungen (60, 60'), um in dem empfangenen Informationsstrom einen durch Gruppen von m aufeinanderfolgenden Elementen gebildeten ersten, Elementarstrom genannten Strom und einen durch Gruppen von p aufeinanderfolgenden Elementen gebildeten zweiten, Komplementärstrom genannten Strom zu trennen, wobei die Gruppen von m aufeinanderfolgenden Elementen abwechseln mit den Gruppen von p aufeinanderfolgenden Elementen,
- Einrichtungen (46), um in den empfangenen Informationen wenigstens eine Zugriffskontrollnachricht (ECM) zu erkennen und um daraus wenigstens ein Kontrollwort (CW) und wenigstens eine Zugriffsbedingung (CA) zu extrahieren bzw. zu entnehmen,
- Einrichtungen (46), um zu verifizieren, ob wenigstens die genannte Zugriffsbedingung (CA) befriedigt wird,
- Einrichtungen (64, 64'), um wenigstens den Komplementärstrom mit Hilfe des zugehörigen Kontrollworts (CW2) zu entschlüsseln, wenn die entsprechende Zugriffsbedingung (CA2) befriedigt wird,
- wenigstens einen Empfänger z.B. des Typs Video (54), Audio (56) oder PC (58), der wenigstens die Signale des Elementarstroms empfängt und gegebenenfalls die Signale des entschlüsselten Komplementärstroms, wenn die entsprechende Zugriffsbedingungen befriedigt wird.

15. Empfänger nach Anspruch 14, dadurch gekennzeichnet:
- daß die Einrichtungen (46) zum Erkennen der Zugriffkontrollnachrichten (EMC) fähig sind, zwei Zugriffskontrollnachrichten (ECM1, ECM2) zu erkennen und zwei Kontrollwörter (CW1, CW2) und zwei Zugriffsbedingungen (CA1, CA2) wiederherzustellen,
- daß die Einrichtungen (46) zur Verifizierung, ob wenigstens eine Zugriffsbedingung befriedigt wird, fähig sind, zu verifizieren, ob die beiden Zugriffsbedingungen (CA1, CA2) befriedigt werden,
- daß die Einrichtungen (64, 64') zur Entschlüsselung wenigstens des Komplementärstroms mit Hilfe des zweiten Kontrollworts (CW2) außerdem fähig sind, den Elementarstrom mit Hilfe des ersten Kontrollworts (CW1) zu entschlüsseln.

16. Empfänger nach Anspruch 14, dadurch gekennzeichnet:
- daß die Einrichtungen (46) zum Erkennen wenigstens einer Zugriffskontrollnachricht (ECM) fähig sind, eine einzige Zugangskontrollnachricht (ECM2) zu erkennen und ein einziges Kontrollwort (CW2) und eine einzige Zugriffsbedingung (CA2) wiederherzustellen,
- daß die Einrichtungen (46) zum Verifizieren, ob wenigstens eine Zugriffskontrollbedingung befriedigt wird, nur verifizieren, ob die genannte Bedingung (CA2) befriedigt wird,
- daß die Einrichtungen (64, 64') zur Entschlüsselung wenigstens des Elementarstroms nur besagten Strom mit Hilfe des einzigen wiederhergestellten Kontrollworts (CW2) entschlüsseln.

17. Empfänger nach Anspruch 16, dadurch gekennzeichnet, daß die Einrichtungen (64, 64') zur Entschlüsselung wenigstens des Komplementärstroms außerdem fähig sind, den Elementarstrom mit Hilfe eines dem Empfänger bekannten Kontrollworts zu entschlüsseln.

18. Empfänger nach Anspruch 14, dadurch gekennzeichnet, daß die Einrichtungen (46) zum Erkennen wenigstens einer Zugriffskontrollnachricht fähig sind, vier Kontrollwörter zu extrahieren, nämlich: ein erstes und zweites geradzahliges Wort (CW1 gerade, CW2 gerade) und ein erstes und zweites ungeradzahliges Wort (CW 1 ungerade, CW2 ungerade), wobei der Empfänger außerdem einen Paritätsspeicher mit wenigstens einem Bit (MEM-PAR) und eine Einrichtung zum Erkennen des Zustands einer Gruppe von zwei empfangenen Bits (TSG) umfaßt.

19. Empfänger nach einem der Ansprüche 14 bis 18, dadurch gekennzeichnet, daß die Empfänger des Typs Video (54), Audio (56) oder PC (58) zugleich die entschlüsselten Signale und die verschlüsselten Signale empfangen.

20. Empfänger nach einem der Ansprüche 14 bis 18, dadurch gekennzeichnet, daß die Empfänger des Typs Video (54), Audio (56) oder PC (58) nur die entschlüsselten Signale empfangen.

## Claims

1. Process for the broadcasting of programmes with progressive conditional access, in which:
- an information flow corresponding to one component of a programme is broken down into a first or elementary flow and into a second or complimentary flow,
- at least the complimentary flow is scrambled with the aid of a control or check word (CW2),
- in synchronous manner with each programme, transmission takes place of entitlement checking messages (ECM) making it possible to descramble and restore the scrambled flows in receivers having the corresponding access or entitlement rights, the restoration of the elementary flow alone leading to a programme component which is discernible without being directly usable and the descrambling of the complimentary flow making it possible to complete the component of the programme in order to permit complete programme restoration, the information flow being in the form of a digital multiplex constituted by a sequence of elements, the elementary flow is formed by taking said multiplex groups of m successive elements and the complimentary flow is formed by taking in the multiplex groups of p successive elements, the groups of m successive elements alternating with the groups of p successive elements.

2. Process according to claim 1, characterized in that the elements of the multiplex are fixed length frames, broken down into variable length channels, the component of the programme to be scrambled being transmitted in a channel of a given order, the elementary flow then being formed by taking the informations contained in a channel of a given order i in groups of m successive frames and the complimentary flow by the informations contained in the channel of the same given order i in groups of p successive frames alternating with said groups of m successive frames.

3. Process according to claim 2, characterized in that scrambling takes place of the channel of given order (i) of groups of m successive frames by a first control word (CW1) and the channel of the same order (i) of groups of p successive frames by a second control word (CW2).

4. Process according to claim 3, characterized in that the first control word (CW1) is a known control word of the receiver or conveyed within an entitlement checking message.

5. Process according to claim 2, characterized in that no scrambling takes place of the channel of the given order (i) of groups of m successive frames, but instead scrambling takes place of the channel of given order (i) of groups of p successive frames by a control word (CW2).

6. Process according to any one of the claims 3 or 5, characterized in that transmission takes place, with the entitlement checking messages, of the value of the quantities m and p, as well as an information indicating as from which frame starts the scrambling with the first or second control word (CW1, CW2).

7. Process according to claim 1, characterized in that the elements of the multiplex are packets and the elementary flow is formed by informations contained in groups of m successive packets and the complimentary flow by informations contained in the groups of p successive packets alternating with the groups of m successive packets.

8. Process according to claim 7, characterized in that scrambling takes place of the packets of groups of m successive packets by a first control word (CW1) and packets of groups of p successive packets by a second control word (CW2).

9. Process according to claim 8, characterized in that the first control word (CW1) is a known control word of the receiver or conveyed within the entitlement checking message.

10. Process according to claim 7, characterized in that scrambling does not take place of the packets of groups of m successive packets, but instead scrambling takes place of the packets of groups of p successive packets by a control word (CW2).

11. Process according to either of the claims 8 and 10, characterized in that, each packet comprising a header, transmission takes place of an information relative to the control word used (CW1, CW2) in the packet header.

12. Process according to claim 7, characterized in that the quantities m and p are variable.

13. Process according to claim 3 or according to claim 8, characterized in that:
- each control word used (CW1, CW2) has a life limited to a time period called a phase, the successive phases being alternately even and odd, the entitlement checking message (EMC1, EMC2) relative to a control word (CW1, CW2) comprising both the current control word of the current phase and the future control word of the following phase, one being called the even word (CWₑ) and being used during an even phase and the other is called the odd word (CWₒ) and being used during an odd phase,
- the first and second control words (CW1, CW2) change parity at the same time,
- four control words are used, namely the even and odd words (CW1ₑ, CW1ₒ) relative to the first control word (CW1) and the even and odd words (CW2ₑ, CW2ₒ) relative to the second control word (CW2),
- a parity information relative to the control words used is transmitted.

14. Receiver adapted for receiving programmes with progressive conditional access transmitted according to the process of claim 1, comprising:
- means (60, 60') for subdividing in the information flow received a first or elementary flow constituted by groups of m successive elements and a second or complimentary flow constituted by groups of p successive elements, the groups of m successive elements alternating with the groups of p successive elements,
- means (46) for recognizing at least one entitlement checking message (ECM) in the informations received and for extracting therefrom at least one control word (CW) and at least one access condition (CA),
- means (46) for checking if at least said access condition (CA) is satisfied,
- means (64, 64') for descrambling at least the complimentary flow with the aid of the associated control word (CW2) if the corresponding access condition (CA2) is satisfied,
- at least one video (54), audio (56) or data (58) receiver receiving at least the signals of the elementary flow and, if appropriate, the signals of the descrambled complimentary flow if the corresponding access condition is satisfied.

15. Receiver according to claim 14, characterized in that:
- the means (46) for recognizing the entitlement checking messages (ECM) are able to recognize two entitlement checking messages (ECM1, ECM2) and restore two control words (CW1, CW2) and two access conditions (CA1, CA2),
- the means (46) for checking if at least one access condition is satisfied are able to check if the two access conditions (CA1, CA2) are satisfied,
- the means (64, 64') for descrambling at least the complimentary flow with the aid of the second control word (CW2) are also able to descramble the elementary flow with the aid of the first control word (CW1).

16. Receiver according to claim 14, characterized in that:
- the means (46) for recognizing at least one entitlement checking message (ECM) are able to recognize a single entitlement checking message (ECM2) and restore a single control word (CW2) and a single access condition (CA2),
- the means (46) for checking if at least one access condition is satisfied only checks if said condition (CA2) is satisfied,
- the means (64, 64') for descrambling at least the complimentary flow solely descrambles the said flow with the aid of the single restored control word (CW2).

17. Receiver according to claim 16, characterized in that the means (64, 64') for descrambling at least the complimentary flow are also able to descramble the elementary flow with the aid of the known control word of the receiver.

18. Receiver according to claim 14, characterized in that the means (46) able to recognize at least one entitlement checking message are able to extract four control words, namely the first and second even words (CW1 even, CW2 even) and the first and second odd words (CW1 odd, CW2 odd), the receiver also comprising a parity memory with at least one bit (MEM-PAR) and a means for recognizing the state of a group of two bits received (TSC).

19. Receiver according to any one of the claims 14 to 18, characterized in that the video (54), audio (56) or data (58) receivers receive both the descrambled signals and the scrambled signals.

20. Receiver according to any one of the claims 14 to 18, characterized in that the video (54), audio (56) or data (58) receivers only receive the descrambled signals.
